# EUROPEAN PATENT APPLICATION

(11) **EP 1 389 007 A1**
(43) Date of publication of application: **11.02.2004**
(21) Application number: 02078305.6
(22) Date of filing: 07.08.2002
(51) Int. Cl.: H04N 5/445

(54) **Display system for and method of navigating through pages**

(71) Applicant: Koninklijke Philips Electronics N.V., 5621 BA Eindhoven (NL)
(72) Inventor: The designation of the inventor has not yet been filed
(74) Representative: Dusseldorp, Jan Charles

(57) **Abstract**

A method of navigating through pages, comprising displaying of a first one of the pages (100) on a display screen (408), the first one of the pages (100) including a reference (122) to a second one of the pages; and moving a selector (116) over a selection axis to a first position, the first position having a spatial coordinate within a coordinate system of the display screen (408), which is substantially equal to a further spatial coordinate of the reference (122) to the second one of the pages.

## Description

The invention relates to a method of navigating through pages comprising displaying of a first one of the pages on a display screen, the first one of the pages including a reference to a second one of the pages.

The invention further relates to a display system for navigating through pages, comprising displaying of a first one of the pages on a display screen of the display system, the first one of the pages including a reference to a second one of the pages.

An embodiment of the method of the kind described in the opening paragraph is known from the navigation through Teletext pages of Television broadcasts. Many Teletext pages comprise references to other Teletext pages, i.e. the numbers of the referenced Teletext pages are rendered in the Teletext page being displayed. The user has to type in the digits of a particular number to select the corresponding Teletext page. Optionally some predetermined Teletext pages can be selected by means of the FLOF/TOP mechanism. However the browsing through the available Teletext pages is relatively cumbersome.

It is an object of the invention to provide a method of the kind described in the opening paragraph which comprises a relatively easy way of selecting references to pages.

This object of the invention is achieved in that the method comprises positioning a selector on a first position of a selection axis, the first position having a spatial coordinate within a coordinate system of the display screen, which is substantially equal to a further spatial coordinate of the reference to the second one of the pages. An advantage of the method according to the invention is that it provides a selection method which is based on a limited set of inputs, e.g. cause by user commands. A user controlling a display system on which the method according to the invention is implemented, e.g. has only to push a button to move the selector in the required direction and optionally a second button to "accept" the selection. Hence such a display system can be controlled easily by means of simple user interface means, e.g. by means of a remote control of a television set. The user does not have to read carefully the name of the reference to the required page, and then to type the digits corresponding to the name. Another well-known navigation method, based on moving a cursor in two directions on a screen to pin-point to a particular position is also relatively cumbersome for many applications running on displays systems without easy pointing devices.

In an embodiment of the method according to the invention the first and second one of the pages comprises respective Teletext pages. Teletext pages are often displayed on systems with limited graphical user interface means. For instance most of these systems do not have a mouse or other device for giving in two dimensional coordinates. Hence the method is very advantageous for display systems which are arranged to display Teletext pages. With the method according to the invention the content of a Teletext page to be displayed on prior art systems like standard Television sets and the content of a Teletext page to be displayed on more advanced display systems can be equal. The content of the Teletext page does not have to be adapted for different types of receivers. In other words, the appearance of the Teletext pages is constant, independent of the capabilities of the display system. Hence, the Teletext page itself does not or hardly include user interface controls.

In an embodiment of the method according to the invention the selection axis is represented by means of a vertical bar. Preferably the vertical bar is located adjacent to the Teletext page which is displayed on the display screen. In that case the Teletext page which is displayed on the display screen might be based on a horizontally reduced Teletext page as received by the display system. E.g. in a Teletext-TV according to the prior art, Teletext is displayed over 25 lines, called row 0 - row 24, each row having 40 characters. In an embodiment of a display system according to the invention the Teletext page, e.g. based on the TeleWeb specification as specified in "IEC 62298-1 TeleWeb application", is displayed with an additional column. To achieve this the Teletext page as received by the display system is reduced horizontally to a Teletext page to be displayed on the screen. The free space is applied to draw the vertical bar adjacent to the Teletext page. The vertical bar is generated by the display system.

In an embodiment of the method according to the invention the selector is moved from a first position on the selection axis to a second position on the selection axis on basis of a user command, with the first and second position corresponding to respective rows of the Teletext page which is displayed on the display screen. Typically the user command is given by means of pushing a key of a remote control of the display system. Preferably the key of the remote control comprises a picture of an arrow. The reference to the second one of the pages is selected by means of pushing a further key if the selector is located at the second position, with a first one of the rows corresponding to the second position comprising the reference to the second one of the pages. Typically the further button is the so-called "OK"-button.

An embodiment of the method according to the invention comprises viewing a pop-up window comprising the reference to the second one of the pages. If a row of a Teletext page comprises multiple references then one of these multiple references can be selected by means of the pop-up window.

An embodiment of the method according to the invention further comprises moving the selector over a further selection axis which is orthogonal to the selection axis. An advantage of this embodiment is that selection of a reference from a set of references with mutually equal spatial coordinates on the first selection axis, is easy.

It is a further object of the invention to provide a display system of the kind described in the opening paragraph which comprises means for selecting references to pages in a relatively easy way.

This object of the invention is achieved in that the display system comprises selector means for positioning a selector on a first position of a selection axis, the first position having a spatial coordinate within a coordinate system of the display screen, which is substantially equal to a further spatial coordinate of the reference to the second one of the pages
Modifications of method and variations thereof may correspond to modifications and variations thereof of the display system described.

These and other aspects of the method and of the display system according to the invention will become apparent from and will be elucidated with respect to the implementations and embodiments described hereinafter and with reference to the accompanying drawings, wherein:
Fig. 1 schematically shows an example of a user interface of a TeleWeb application with a Teletext page;
Fig. 2 schematically shows an example of a user interface of a TeleWeb application with a Teletext page comprising a pop-up window;
Fig. 3 schematically shows another example of a user interface of a TeleWeb application with a Teletext page comprising a pop-up window; and
Fig. 4 schematically shows a display system according to the invention. Same reference numerals are used to denote similar parts throughout the figures.

The method according to the invention might be applied in a TeleWeb application. The aim of TeleWeb is to deliver World Wide Web-style content to the living room TV to give the viewer an enhanced television experience. A TeleWeb service broadcasts data files containing text and high-definition graphics to suitable decoders. The data transmitted can be closely linked to events within the accompanying TV programs, or can be more general in nature to emulate a traditional, but higher definition, superTeletext service. TeleWeb services can be broadcast in a number of different ways, e.g. Vertical Blanking Interval (VBI), Digital Video Broadcasting (DVB), Digital Audio Broadcasting (DAB), etc., and to a variety of decoder types, e.g. TVs, portable decoders, PCs, etc. The encoding and transmission scheme is designed to be as efficient and robust as possible consistent with conveying potentially large data files via a unidirectional channel or bidirectional channel with a low or high data rate. For example, TeleWeb data can be broadcast via Teletext packets using existing infrastructures. The TeleWeb data stream can be encoded into independent data packets that can be transmitted with minimal interference to existing Teletext services. In many instances it will be possible to recover otherwise wasted Teletext transmission capacity and the effect on existing services will be negligible. It is possible to carry multiple services from different service providers on the same television channel. The fast transmission of services on analogue TV channels where there is no accompanying video component is also possible. Two TeleWeb profiles are defined: a first profile for SuperTeletext TV and a second profile for TV with Interaction Channel.

A database of files is broadcast; some or all of which are captured and stored by a decoder. Certain files may be broadcast repetitively; others may be transmitted only once when they contain real-time updates or are linked to events in the accompanying TV program. Each file has a set of attributes to define the file name, file type and other parameters as required. One of these is the theme or content description. This allows a decoder to be programmed to receive only specific information, or to exclude certain categories. This is useful where the volume of data transmitted exceeds the storage capacity available in the decoder. Navigation to other pages is via embedded links. It is possible that there may be more than one TeleWeb service on a given channel. Therefore each service includes additional information to allow a menu of available services to be presented to the user.

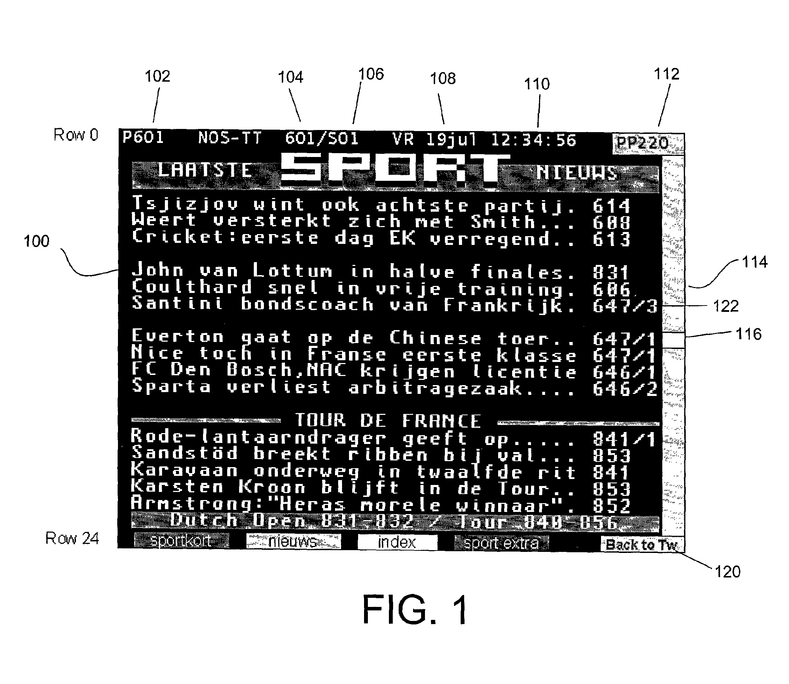

Fig. 1 schematically shows an example of a user interface of a TeleWeb application with a Teletext page 100. The Teletext page 100 presents a real-life example of a Teletext (sports-) page from the Dutch national broadcaster NOS. The Teletext page 100 comprises an index to other Teletext pages. The following TeleWeb user interface elements are depicted:
- Page number input 102. When the user operates the number keys on the RC (remote control) of the display system, the numbers appear here. Typing three numbers will select the corresponding Teletext page;
- Current page indicator104 and sub-page indicator 106. Sub-pages are selected with the left/right arrow keys on the RC;
- Current date indicator 108 and current time indicator 110;
- Previously viewed page indicator 112. Pressing the Ok button on the RC will select the previous page. This offers the user a quick and easy way of getting to the previous page, which could be either a Teletext page or a TeleWeb page. If it is a Teletext page then a three-digit number is displayed by the previously viewed page indicator 112. If it is a TeleWeb page it will be the, optionally condensed, name of that TeleWeb page.
- The selection bar 114 and the selector 116. The selector 116 is controlled with the up/down arrow keys on the RC. A Teletext page is selected by moving the selector to a row, which indexes, i.e. references, a Teletext page, and pressing the "OK"-button on the RC. In Fig. 1 the selector 116 is located at the position of the row with the reference to Teletext page 647. The working of this selection mechanism is based on links being provided by the broadcaster, which give the position of the selector 116 a meaning. The selection bar 114 and the selector 116 are useful if the Teletext page 100 comprises an index of other Teletext pages, which many Teletext pages do. In the case that the Teletext page being displayed does not comprise references, the selector 116 will be invisible.
- The back-to-TeleWeb user interface element 120 enables an escape from any Teletext page to the previous TeleWeb page at any time. E.g. by using the down arrow key the selector 116 can be moved to the back-to-TeleWeb user interface element 120.

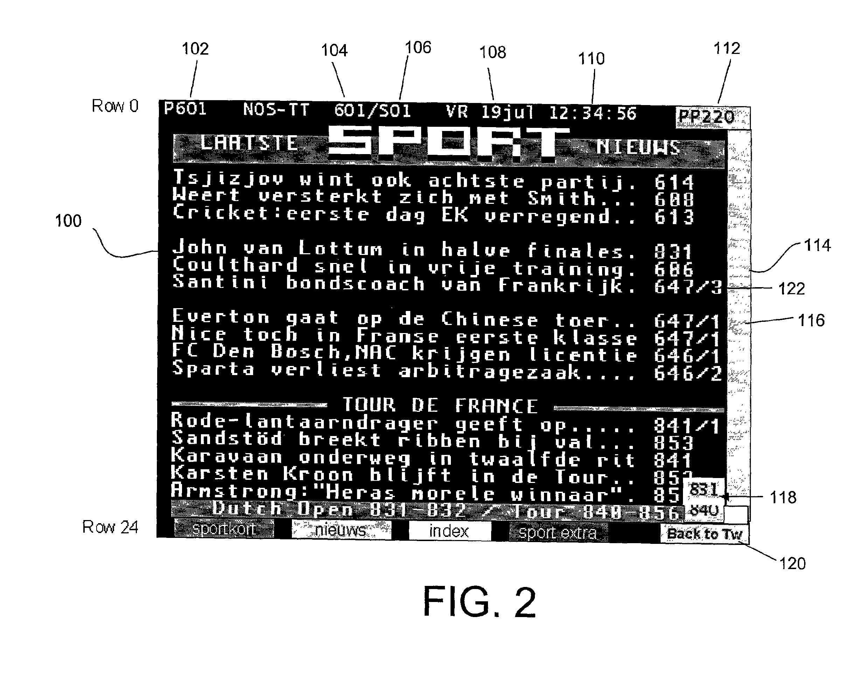

Fig. 2 schematically shows an example of a user interface of a TeleWeb application with a Teletext page 100 comprising a pop-up window 118. If the selector 116 is moved to a row containing more than one Teletext page reference, a pop-up window 118 appears to the left of the selection bar 114. The pop-up comprises the referenced Teletext page numbers, e.g. 831 and 840. One of the entries in the pop-up window 118 gets highlighted. This might be implemented by means of displaying a rectangle around one of the Teletext page numbers, e.g. 831. If the selector 116 was on its way downwards, the rectangle will appear on the top entry in the pop-up window 118, and vice versa if the selector 116 was going upwards.

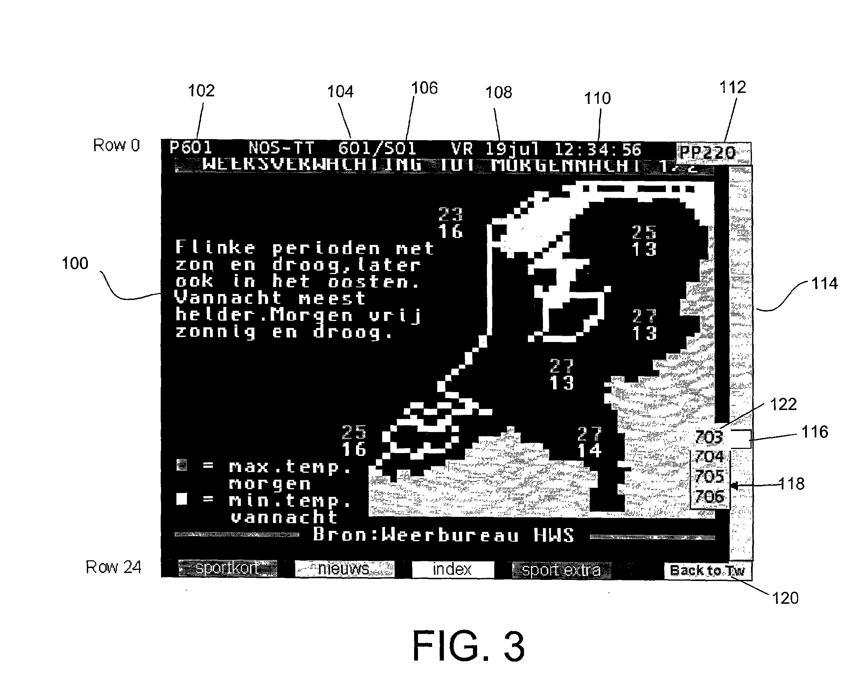

Fig. 3 schematically shows another example of a user interface of a TeleWeb application with a Teletext page 100 comprising a pop-up window 118. The pop-up window 118 can also be used on Teletext pages without any index, i.e. list of other Teletext pages. In Fig. 3 it is shown that the pop-up window 118 gives quick access to related Teletext pages of the Teletext page being displayed on the display screen.

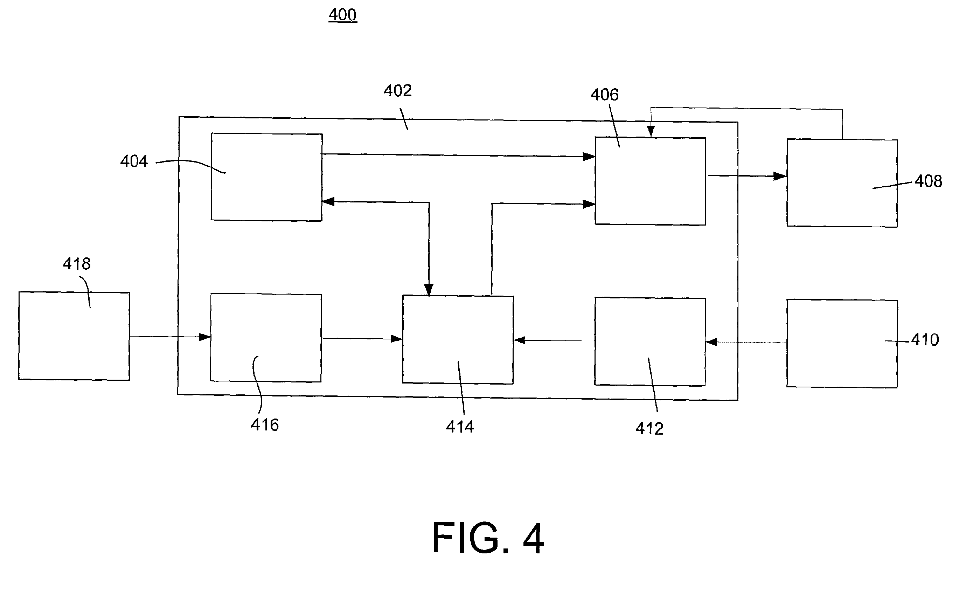

Fig. 4 schematically shows a display system 400 according to the invention. The display system 400 is a television set comprising:
- a receiver 418 for receiving a signal as broadcast by a content provider. The receiver comprises a tuner to select the required data stream from the received signal and provides the data stream to a decoder 402. The data stream comprises the Teletext pages in a HTML format: The layout of the Teletext pages, the content of the Teletext pages and the hyperlinks to other Teletext pages are included.
- the decoder 402 is a TV-based Supertelext TV TeleWeb decoder as specified by the International Electrotechnical Commission (IEC) and comprises a data-slicer 416, a processing unit 414, a memory unit 404, a display controller 406 and an infra-red receiver for receiving an infra-red signal as being generated by a remote control 410;
- the remote control 410 comprises a number of buttons: buttons on which numerical values are depicted, buttons on which arrows are depicted and a button on which "OK" is drawn. These buttons are applied for the selection of TeleWeb pages, e.g. Teletext pages as described in connection with Figs. 1-3;
- a display screen 408 for displaying the user interface of a TeleWeb application with TeleWeb pages, e.g. Teletext pages. On the display screen 408 also usual video images corresponding to a movie or regular television program can be displayed.

The display system 400 is arranged to run a TeleWeb application with which TeleWeb pages can be displayed. Selecting a link to a Teletext page results in displaying the Teletext page with the user interface as depicted in Fig 1. The same will happen if interactive mode is entered when viewing a broadcast that only contains Teletext. In order to support the application, the broadcaster has to send a hyperlink to each referenced Teletext page. These hyperlinks are used to create positions to which the selector 114 has to be moved in order to select the corresponding Teletext page. Notice that a less sophisticated Teletext receiver is not arranged to run the TeleWeb application as described. Any additional data that the broadcaster may broadcast to support the proposed behavior, should not disturb such a receiver.

Next it will be described how many links need to be broadcast per Teletext page. A Teletext page may comprises references to several Teletext pages on one row; the limit is set by the Teletext page width, which is 40 characters. The maximum of pages that can be indexed on a row is given by 40 characters per row divided by 4 (3 characters per page number + 1 space in-between) = 10. This is a theoretical maximum which is not realistic in actual Teletext pages. With 23 rows this means that: 23*10 = 230 links may be needed, worst case. For each Teletext page comprising a reference, the following data needs to be broadcast:
- Teletext page number of the Teletext page with the reference;
- Sub-page number of the Teletext page with the reference;
- Row number where the reference is displayed;
- The link, which comprises Teletext page number of the referenced Teletext page and Sub-page number of the referenced Teletext page.

This data might be broadcast in an page which is not to be displayed.

It should be noted that the above-mentioned embodiments illustrate rather than limit the invention and that those skilled in the art will be able to design alternative embodiments without departing from the scope of the appended claims. In the claims, any reference signs placed between parentheses shall not be constructed as limiting the claim. The word 'comprising' does not exclude the presence of elements or steps not listed in a claim. The word "a" or "an" preceding an element does not exclude the presence of a plurality of such elements. The invention can be implemented by means of hardware comprising several distinct elements and by means of a suitable programmed computer. In the unit claims enumerating several means, several of these means can be embodied by one and the same item of hardware.

## Claims

1. A method of navigating through pages, comprising displaying of a first one of the pages (100) on a display screen (408), the first one of the pages (100) including a reference (122) to a second one of the pages, **characterized in that** the method comprises positioning a selector (116) on a first position of a selection axis, the first position having a spatial coordinate within a coordinate system of the display screen (408), which is substantially equal to a further spatial coordinate of the reference (122) to the second one of the pages.

2. A method as claimed in claim 1, **characterized in that** the first (100) and second one of the pages comprises respective Teletext pages.

3. A method as claimed in claim 2, **characterized in that** the selection axis is represented by means of a vertical bar (114).

4. A method as claimed in claim 3, **characterized in that** the vertical bar (114) is located adjacent to the Teletext page (100) which is displayed on the display screen (408) and that the Teletext page (100) which is displayed on the display screen (408) is based on a Teletext page as received by a display system (400) comprising the display screen (408)

5. A method as claimed in claim 4, **characterized in that** the Teletext page (100) which is displayed on the display screen (408) is based on a horizontally reduced Teletext page as received by the display system (400).

6. A method as claimed in claim 3, **characterized in that** the selector (116) is moved from a first position on the selection axis to a second position on the selection axis (116) on basis of a user command, with the first and second position corresponding to respective rows of the Teletext page (100) which is displayed on the display screen.

7. A method as claimed in claim 6, **characterized in that** the user command is given by means of pushing a key of a remote control (410) of the display system (400).

8. A method as claimed in claim 7, **characterized in that** the key of the remote control (410) comprises a picture of an arrow.

9. A method as claimed in claim 6, **characterized in that** the reference (122) to the second one of the pages is selected by means of pushing a further key if the selector is located at the second position, with a first one of the rows corresponding to the second position comprising the reference (122) to the second one of the pages.

10. A method as claimed in claim 2, **characterized in that** the method comprises viewing a pop-up window (718) comprising the reference (122) to the second one of the pages.

11. A method as claimed in any of the claims above, **characterized in that** the method further comprises moving the selector (116) over a further selection axis which is orthogonal to the selection axis.

12. A display system (400) for navigating through pages, comprising displaying of a first one of the pages (100) on a display screen (408) of the display system (100), the first one (100) of the pages including a reference (122) to a second one of the pages, **characterized in that** the display system (400) comprises selector means (410) for positioning a selector (116) on a first position of a selection axis, the first position having a spatial coordinate within a coordinate system of the display screen (408), which is substantially equal to a further spatial coordinate of the reference (122) to the second one of the pages.

13. A display system (400) as claimed in claim 12 comprising a television set.
